# EUROPEAN PATENT SPECIFICATION

(11) **EP 3 335 918 B1**
(45) Date of publication and mention of the grant of the patent: **01.01.2020**
(21) Application number: 16845865.1
(22) Date of filing: 05.07.2016
(51) Int. Cl.: B60H 1/00, B60H 3/06

(54) **AIR BLOWING DEVICE**
LUFTAUSBLASVORRICHTUNG
DISPOSITIF DE SOUFFLAGE D'AIR

(30) Priority: 17.09.2015 JP 2015184075
(43) Date of publication of application: 20.06.2018
(73) Proprietor: Japan Climate Systems Corporation, Higashihiroshima-shi, Hiroshima 739-0153 (JP)
(72) Inventor: FUJIMOTO, Kazumi, Higashihiroshima-shi Hiroshima 739-0153 (JP); YAMAMOTO, Tsutomu, Higashihiroshima-shi Hiroshima 739-0153 (JP)
(74) Representative: Thoma, Michael
(86) International application number: PCT/JP2016/003210
(87) International publication number: WO 2017/046985

(56) References cited:
- JP-A- H 106 740
- JP-A- H1 016 534
- JP-A- H10 272 966
- JP-A- H11 170 841
- JP-A- H11 334 340
- JP-A- H11 334 340
- JP-A- S62 155 113
- JP-A- 2000 052 743
- JP-U- S6 231 508
- JP-U- S6 231 508
- JP-U- S54 178 346
- KR-B1- 100 842 210
- US-A1- 2010 035 534
- US-A1- 2014 045 417

## Description

### TECHNICAL FIELD

The present invention relates to an air blowing device which blows air-conditioning air, particularly to a configuration mounted on a vehicle and blows air inside a cabin and air outside the cabin.

### BACKGROUND ART

A vehicle air conditioner generally includes a cooling heat exchanger, a heating heat exchanger, and an air blowing device which blows air-conditioning air to these heat exchangers. The vehicle air conditioner supplies the air-conditioning air that has been blown by the air blowing device and had temperature controlled by the cooling heat exchanger and the heating heat exchanger to areas inside of a cabin (see, e.g., JP 2013-78979).

An air blowing device of JP 2013-78979 includes a casing having an outside air inlet through which air outside the cabin is introduced, and an inside air inlet through which air inside the cabin is introduced. The casing is provided with an outside air door which opens and closes the outside air inlet, an inside air door which opens and closes the inside air inlet, and a partition door which partitions the interior of the casing into a room adjacent to the outside air inlet and a room adjacent to the inside air inlet. Further, the casing includes an outside air passage and an inside air passage, which are independently provided. The outside and inside air passages are respectively provided with blower fans, which are driven by a common motor.

This air blowing device is switched between three different modes through opening/closing of the outside air door, the inside air door, and the partition door. The three different modes are: an outside air introduction mode in which only the air outside the cabin is introduced into the device; an inside air introduction mode in which only the air inside the cabin is introduced into the device; and a double-layer flow mode in which both of the outside air and the inside air are introduced into the device. In the double-layer flow mode, the outside air is allowed to flow through the outside air passage, and the inside air is allowed to flow through the inside air passage. The double-layer flow mode is effective, particularly in winter, because the dry outside air flowing through the outside air passage is fed to an inner surface of a windshield to prevent the windshield from fogging, and the inside air, which is relatively warm, is circulated through the inside air passage to improve heating efficiency.

Furthermore, document KR 100 842 210 B1 discloses an air blowing device comprising outside and insite air inlets, a switching door opening and closing such inlets, wherein said outside and inside air inlets and a rotating shaft of the switching door extend in the lenghtswise direction of the vehicle, wherein first and second air flow passages are arranged one above the other with first and second fans arranged in said flow passages. Further air blowing devices are known from JP H11 3343 40 A, US 2010/035534 A1 and JP S62 315 08 U.

### SUMMARY OF THE INVENTION

### TECHNICAL PROBLEM

If the air blowing device is able to operate in the double-layer flow mode, both of the outside air and the inside air are introduced into the casing. Thus, the outside air passage and the inside air passage need to be formed independently within the casing. According to JP 2013-78979, an upper passage and a lower passage, which are the two independent passages, are arranged one above the other in a vertical direction in the casing, and a blower fan is provided in each of the passages. This configuration inevitably increases the height of the air blowing device. For example, if the air blowing device is arranged inside an instrument panel, the degree of flexibility in arrangement of the air blowing device and other components in the instrument panel may decrease.

As a solution to such a problem, the outside and inside air inlets can be made smaller to downsize the casing. However, such downsizing may reduce an area of opening of each of the outside and inside air inlets, which increases air-flow resistance, and leads to decrease in the amount of air blown.

In view of the foregoing, it is therefore an object of the present invention to reduce the height of an air blowing device which is able to operate in an inside/outside air double-layer flow mode without decreasing the amount of air blown, thereby improving the degree of flexibility in arrangement of the air blowing device.

### SOLUTION TO THE PROBLEM

To achieve the object, according to the present invention, an outside air inlet and an inside air inlet of a casing are formed to extend in a lengthwise direction of a vehicle, and a rotating shaft of an inside/outside air switching door is designed to extend in the lengthwise direction of the vehicle.

A first aspect of the present invention is directed to an air blowing device including: a casing having an outside air inlet through which air outside a cabin is introduced as air-conditioning air, and an inside air inlet through which air inside the cabin is introduced as the air-conditioning air; an inside/outside air switching door which opens and closes the outside air inlet and the inside air inlet; and a door drive unit which drives the inside/outside air switching door, the air blowing device being mounted on a vehicle, and blowing the air-conditioning air, wherein the outside air inlet and the inside air inlet of the casing extend in a lengthwise direction of the vehicle, the inside/outside air switching door has a rotating shaft which extends in the lengthwise direction of the vehicle, and is rotatably supported by the casing, the rotating shaft being provided with an open/close plate which opens and closes the outside air inlet and the inside air inlet, the door drive unit is coupled to the rotating shaft of the inside/outside air switching door, a first passage and a second passage, through each of which the air-conditioning air flows, are arranged one above the other in a vertical direction in the air blowing device, each of the first and second passages communicating with the outside air inlet and the inside air inlet, and a first fan and a second fan, each of which blows the air-conditioning air, are respectively arranged in the first and second passages.

In some cases, a heat exchanger or any other component of an air conditioner may be arranged on the side of the air blowing device in a widthwise direction of the vehicle. In such a case, some clearance can be created in front of and behind the air blowing device. Thus, the casing can be enlarged in the lengthwise direction of the vehicle. According to the present invention, the outside and inside air inlets of the casing extend in the lengthwise direction of the vehicle. Thus, even if the outside and inside air inlets have their vertical dimension reduced so as to reduce the height of the air blowing device, each of the outside and inside air inlets can maintain a sufficient dimension in the lengthwise direction, and keep a large opening area.

The door drive unit is attached to a rear wall of the casing in the lengthwise direction of the vehicle.

In this configuration, the door drive unit is arranged behind the casing where there is some clearance left. This can improve the degree of flexibility in arrangement of the door drive unit.

The casing is divided into a front casing member and a rear casing member at a center portion of the casing in the lengthwise direction of the vehicle, and a filter insertion hole through which a filter for filtering the air-conditioning air is inserted into the casing is formed through a rear wall of the rear casing member.

In this configuration, the filter insertion hole formed through the rear wall of the rear casing member allows the filter to be easily replaced from the rear side of the vehicle, i.e., by the passenger in the cabin.

In a further aspect, a lower end of the door drive unit is positioned above an upper end of the filter insertion hole.

In this configuration, the door drive unit is attached to the casing to be adjacent to the passenger. Further, the lower end of the door drive unit is positioned above the upper end of the filter insertion hole. This allows the filter to be replaced without interfering with the door drive unit, and thus, facilitates the replacement.

In a further aspect, the outside air inlet and the inside air inlet are arranged side by side in the casing in a widthwise direction of the vehicle, and the rotating shaft of the inside/outside air switching door is disposed between the outside air inlet and the inside air inlet.

In this configuration, the rotating shaft of the inside/outside air switching door extends in the lengthwise direction of the vehicle between the outside and inside air inlets. Thus, rotating the inside/outside air switching door about the rotating shaft in the widthwise direction opens and closes the outside and inside air inlets.

In a further aspect, the inside air inlet is open at least in a left or right portion of the casing in the widthwise direction of the vehicle.

In this configuration, the inside air inlet does not open toward the cabin. Thus, when both of the outside and inside air inlets are open, for example, noise from the outside of the cabin is not easily heard by passengers in the cabin via the inside air inlet.

In a further aspect, the inside air inlet includes inside air inlets which are respectively open in the left and right portions of the casing in the widthwise direction of the vehicle, and the outside air inlet is formed between the inside air inlet in the left portion of the casing and the inside air inlet in the right portion of the casing.

In this configuration, the outside air inlet can be formed in a center portion of the casing in the widthwise direction of the vehicle. This allows the outside air to be smoothly introduced from the widthwise center portion of the casing.

### ADVANTAGES OF THE INVENTION

According to the first aspect, the first and second passages communicating with the outside air inlet and the inside air inlet are arranged one above the other in a vertical direction in the air blowing device, and the first and second fans are respectively arranged in the first and second passages. Thus, the air blowing device can operate in an inside/outside air double-layer flow mode. The outside air inlet and inside air inlet of the casing extend in the lengthwise direction of the vehicle, and the inside/outside air switching door which opens and closes the outside and inside air inlets has the rotating shaft extending in the lengthwise direction of the vehicle. Thus, even if the outside and inside air inlets have their vertical dimension reduced so as to reduce the height of the air blowing device and improve the degree of flexibility in arrangement of the air blowing device, each of the outside and inside air inlets can maintain a sufficient dimension in the lengthwise direction of the vehicle, and keep a large opening area. Thus, the amount of air blown does not easily decrease.

The door drive unit is arranged behind the casing where there is some clearance left. This can improve the degree of flexibility in arrangement of the door drive unit.

The filter insertion hole formed through the rear wall of the rear casing member allows the filter to be easily replaced by the passenger in the cabin.

According to a further aspect, the lower end of the door drive unit is positioned above the upper end of the filter insertion hole. This can reduce the possibility that the filter interferes with the door drive unit during replacement, and thus, facilitate the replacement.

According to a further aspect, the outside and inside air inlets are arranged side by side in the casing in the widthwise direction of the vehicle, and the rotating shaft of the inside/outside air switching door is disposed between the outside and inside air inlets. Thus, rotating the inside/outside air switching door in the widthwise direction of the vehicle can open and close the outside and inside air inlets.

According to a further aspect, the inside air inlet is open at least in the left or right portion of the casing in the widthwise direction of the vehicle. Thus, the inside air inlet does not open toward the cabin. In this configuration, when both of the outside and inside air inlets are open, noise from the outside of the cabin is not easily heard by passengers in the cabin via the inside air inlet. This can provide the cabin with improved quietness.

According to a further aspect, the outside air inlet is provided between the inside air inlet in the left portion of the casing and the inside air inlet in the right portion of the casing. Thus, the outside air can be smoothly introduced through the widthwise center portion of the casing, and a sufficient amount of air can be blown during the introduction of the outside air. Further, the inside air can be introduced through both of the inside air inlets in the right and left portions of the casing. Thus, a sufficient amount of air can be blown during the introduction of the inside air.

### BRIEF DESCRIPTION OF THE DRAWINGS

[FIG. 1] FIG. 1 is a perspective view illustrating an air blowing device according to an embodiment as viewed from the rear side of a vehicle.
[FIG. 2] FIG. 2 is an exploded perspective view illustrating an inside/outside air switching unit.
[FIG. 3] FIG. 3 is a cross-sectional view taken along the line III-III shown in FIG. 1.
[FIG. 4] FIG. 4 is a cross-sectional view taken along the line IV-IV shown in FIG. 1, illustrating the air blowing device in an outside air introduction mode.
[FIG. 5] FIG. 5 is view corresponding to FIG. 4, illustrating the air blowing device in an inside air introduction mode.
[FIG. 6] FIG. 6 is view corresponding to FIG. 4, illustrating the air blowing device in an inside/outside air introduction mode.
[FIG. 7] FIG. 7 is view corresponding to FIG. 4, illustrating the air blowing device in an inside/outside air double-layer flow mode.

### DETAILED DESCRIPTION

An embodiment of the present invention will now be described in detail with reference to the drawings. The following description of preferred embodiments is only an example in nature, the scope of the invention is only limited by the appended claims.

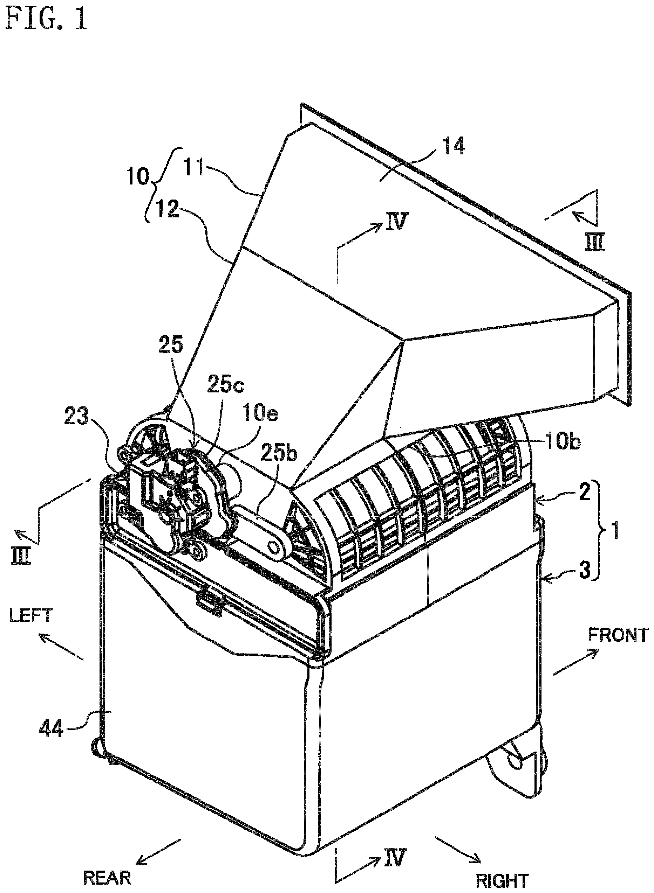

FIG. 1 is a perspective view illustrating an air blowing device 1 of an embodiment of the present invention in a state mounted on a vehicle, as viewed from the upper rear right side of the vehicle. In the following description of the embodiment, the front, rear, left, and right sides of the vehicle will be simply referred to as the "front," "rear," "left," and "right," respectively.

The air blowing device 1 is housed in an instrument panel (not shown) arranged in a front end of a cabin of a vehicle, and is configured as an air blowing device mounted on a vehicle together with an air conditioning unit (not shown). The air blowing device 1 is arranged on the right of a center portion of a vehicle body in a widthwise direction of the vehicle body (this will be hereinafter referred to as a "widthwise direction"). The air conditioning unit is arranged in the center portion of the vehicle body in the widthwise direction. Although not shown, other components such as a navigation system and a passenger-side air bag are also arranged in the instrument panel.

The air conditioning unit includes components not shown in the drawings, namely, a cooling heat exchanger, a heating heat exchanger, a temperature control damper, a blowing direction switching damper, and a casing housing these components. Air-conditioning air blown from the air blowing device 1 has its temperature controlled by the cooling heat exchanger, the heating heat exchanger, and the temperature control damper, and is fed to areas inside the cabin through the operation of the blowing direction switching damper. The air conditioning unit has a generally known structure, which is not described in detail below.

### (General Configuration of Air Blowing Device)

The air blowing device 1 includes an inside/outside air switching unit 2 and an air blowing unit 3. The inside/outside air switching unit 2 constitutes an almost upper half of the air blowing device 1, while the air blowing unit 3 constitutes an almost lower half of the air blowing device 1. As will be described in detail later, the inside/outside air switching unit 2 switches the air blowing device between a mode for introducing one of the outside air or the inside air, and a mode for introducing both of the outside air and the inside air. The air blowing unit 3 blows the air-conditioning air introduced through the inside/outside air switching unit 2 to the air conditioning unit.

### (Configuration of Inside/Outside Air Switching Unit)

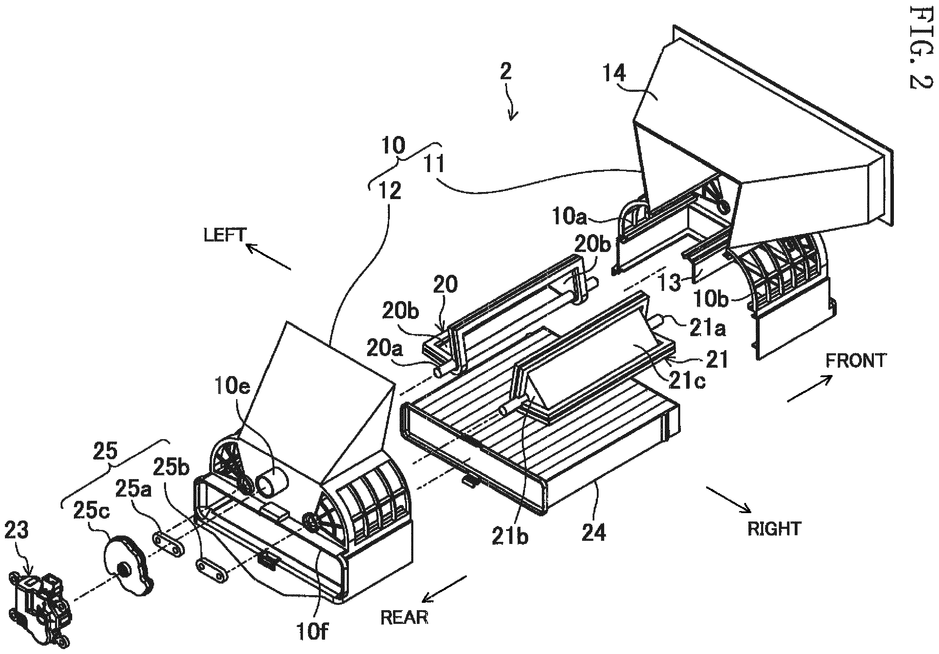

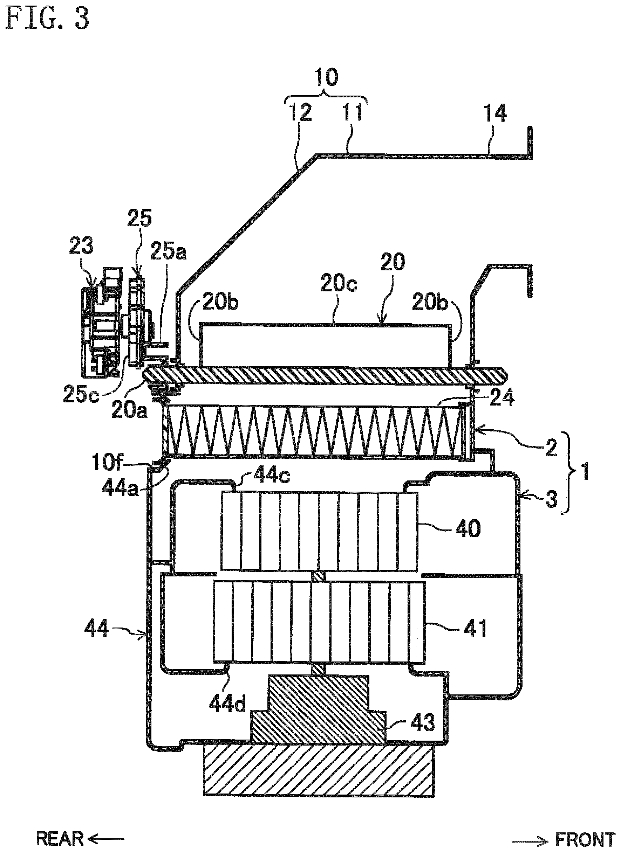

A configuration of the inside/outside air switching unit 2 will be described below. As shown in FIGS. 2 and 3, the inside/outside air switching unit 2 includes a casing 10, a left inside/outside air switching door 20, a right inside/outside air switching door 21, a door drive unit 23, and a filter 24. The casing 10 is divided into a front casing member 11 and a rear casing member 12 at a center portion of the casing 10 in a lengthwise direction of the vehicle body (this will be hereinafter referred to as a "lengthwise direction"). The front and rear casing members 11 and 12 are molded from a resin, and are fastened and integrated together via a fastening member or any other suitable member. With the casing divided in this manner, a front wall of the front casing member 11 and a rear wall of the rear casing member 12 can be made seamless. This can increase the strength of each wall.

A left inside air inlet 10a is formed in an upper left portion of the casing 10 to extend in the lengthwise direction of the casing 10, and open toward the left of the casing 10. The left inside air inlet 10a opens from a front end to rear end of the casing 10. A right inside air inlet 10b is formed in an upper right portion of the casing 10 to extend in the lengthwise direction of the casing 10, and open toward the right of the casing 10. The right inside air inlet 10b opens from the front end to rear end of the casing 10.

In this embodiment, the air conditioning unit and the air blowing device 1 are arranged side by side within the instrument panel. That is, almost no clearance is left on the sides of the air blowing device 1 in the widthwise direction. Thus, the air blowing device 1 needs to be shortened in the widthwise direction, i.e., cannot be enlarged in the widthwise direction. On the other hand, some clearance is left in front of and behind the air blowing device 1. Thus, the air blowing device 1 can be enlarged in the lengthwise direction. If the left inside air inlet 10a and the right inside air inlet 10b are provided for the air blowing device 1 to extend in the lengthwise direction, the left and right inside air inlets 10a and 10b can have their vertical dimension reduced, while maintaining a sufficient opening area of each of the left and right inside air inlets 10a and 10b.

The left and right inside air inlets 10a and 10b open in the cabin, and communicate with the interior space of the cabin. Thus, the left and right inside air inlets 10a and 10b function as openings through which the air inside the cabin are introduced as the air-conditioning air into the air blowing device.

The casing 10 is provided with an upper partition wall 13 which divides a room inside the casing 10 into a right one and a left one. The upper partition wall 13 extends in both of the vertical direction and the lengthwise direction. A front end of the upper partition wall 13 is integrated with an inner surface of the front wall of the casing 10, and a rear end of the upper partition wall 13 is integrated with an inner surface of the rear wall of the casing 10.

An upper portion of the upper partition wall 13 is bent to the left. In the upper portion of the casing 10, a left outside air inlet 10c and a right outside air inlet 10d are formed above the upper partition wall 13. The left and right outside air inlets 10c and 10d extend in the casing in the lengthwise direction of the vehicle along the upper partition wall 13, and open upward. Each of the left and right outside air inlets 10c and 10d opens from the front end to rear end of the casing 10.

As described above, the air blowing device 1 can be enlarged in the lengthwise direction. Thus, the vertical dimension of the left and right outside air inlets 10c and 10d can be reduced, while maintaining a sufficient opening area of each of the left and right outside air inlets 10c and 10d.

The left and right outside air inlets 10c and 10d are formed to be adjacent to each other in the widthwise direction between the left and right inside air inlets 10a and 10b in the casing 10, and open in a substantial center portion of a top wall of the casing 10. Thus, the left inside air inlet 10a, the left outside air inlet 10c, the right outside air inlet 10d, and the right inside air inlet 10b are formed through the top wall of the casing 10 to be arranged side by side in the widthwise direction.

An upper portion of the casing 10 constitutes an outside air introducing duct 14 communicating with the left outside air inlet 10c and the right outside air inlet 10d. The outside air introducing duct 14, which is a portion of the top wall of the casing 10, protrudes upward from, and extends forward between, the left and right inside air inlets 10a and 10b, and has an open front end. The outside air introducing duct 14 has a cross sectional area which increases with decrease in a distance to the front end.

A rear portion of the outside air introducing duct 14 is integrally molded with the rear casing member 12. A front portion of the outside air introducing duct 14 is integrally molded with the front casing member 11. The open front end of the outside air introducing duct 14 is connected to an outside air inlet of a cowl (not shown) provided for the vehicle body. Thus, the left and right outside air inlets 10c and 10d serve as openings through which the air outside the cabin is introduced as the air-conditioning air into the air blowing device.

The left inside/outside air switching door 20 is a rotary damper for opening and closing the left inside air inlet 10a and the left outside air inlet 10c, and includes a rotating shaft 20a extending in the lengthwise direction and is rotatably supported by the front and rear walls of the casing 10. The rotating shaft 20a of the left inside/outside air switching door 20 is disposed between the left inside air inlet 10a and the left outside air inlet 10c. The rotating shaft 20a of the left inside/outside air switching door 20 has end walls 20b protruding radially from respective axial ends (front and rear ends) of the rotating shaft 20a. An open/close plate 20c extending in the axial direction is provided to couple protruding ends of the end walls 20b together. When the left inside/outside air switching door 20 rotates about the rotating shaft 20a, the open/close plate 20c opens and closes the left inside air inlet 10a and the left outside air inlet 10c.

The right inside/outside air switching door 21 is a rotary damper for opening and closing the right inside air inlet 10b and the right outside air inlet 10d, and includes a rotating shaft 21a extending in the lengthwise direction and is rotatably supported by the front and rear walls of the casing 10. The rotating shaft 21a of the right inside/outside air switching door 21 extends substantially parallel to the rotating shaft 20a of the left inside/outside air switching door 20, and is disposed between the right inside air inlet 10b and the right outside air inlet 10d. The rotating shaft 21a of the right inside/outside air switching door 21 has end walls 21b protruding radially from respective axial ends (front and rear ends) of the rotating shaft 21a. An open/close plate 21c extending in the axial direction is provided to couple protruding ends of the end walls 21b together. When the right inside/outside air switching door 21 rotates about the rotating shaft 21a, the open/close plate 21c opens and closes the right inside air inlet 10b and the right outside air inlet 10d.

In this embodiment, the left inside/outside air switching door 20 which opens and closes the left inside air inlet 10a and the left outside air inlet 10c, and the right inside/outside air switching door 21 which opens and closes the right inside air inlet 10b and the right outside air inlet 10d are provided. Thus, the opening/closing of the left inside air inlet 10a and the left outside air inlet 10c, and the opening/closing of the right inside air inlet 10b and the right outside air inlet 10d can be performed independently.

Each of the left and right inside/outside air switching doors 20 and 21 may be a plate damper or any other suitable damper, in place of the rotary damper.

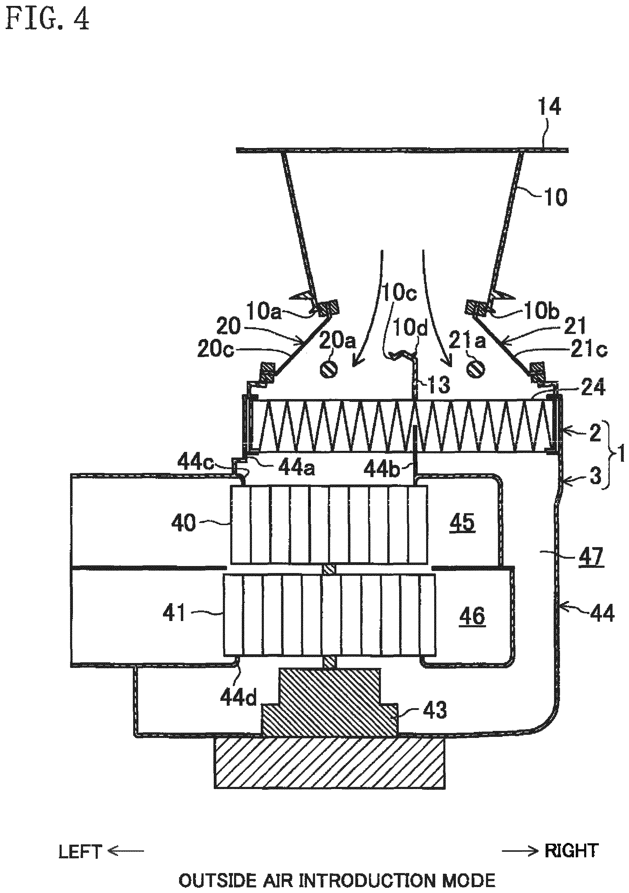

As shown in FIG. 4, when the left inside/outside air switching door 20 fully closes the left inside air inlet 10a and fully opens the left outside air inlet 10c, and the right inside/outside air switching door 21 fully closes the right inside air inlet 10b and fully opens the right outside air inlet 10d, the air blowing device is switched to an outside air introduction mode in which only the outside air is introduced as the air-conditioning air.

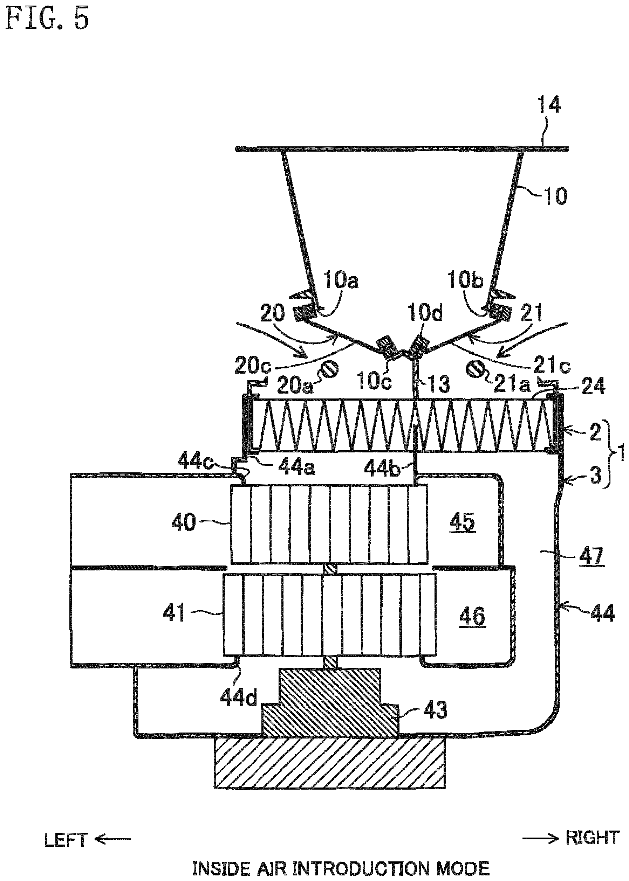

As shown in FIG. 5, when the left inside/outside air switching door 20 fully opens the left inside air inlet 10a and fully closes the left outside air inlet 10c, and the right inside/outside air switching door 21 fully opens the right inside air inlet 10b and fully closes the right outside air inlet 10d, the air blowing device is switched to an inside air introduction mode in which only the inside air is introduced as the air-conditioning air.

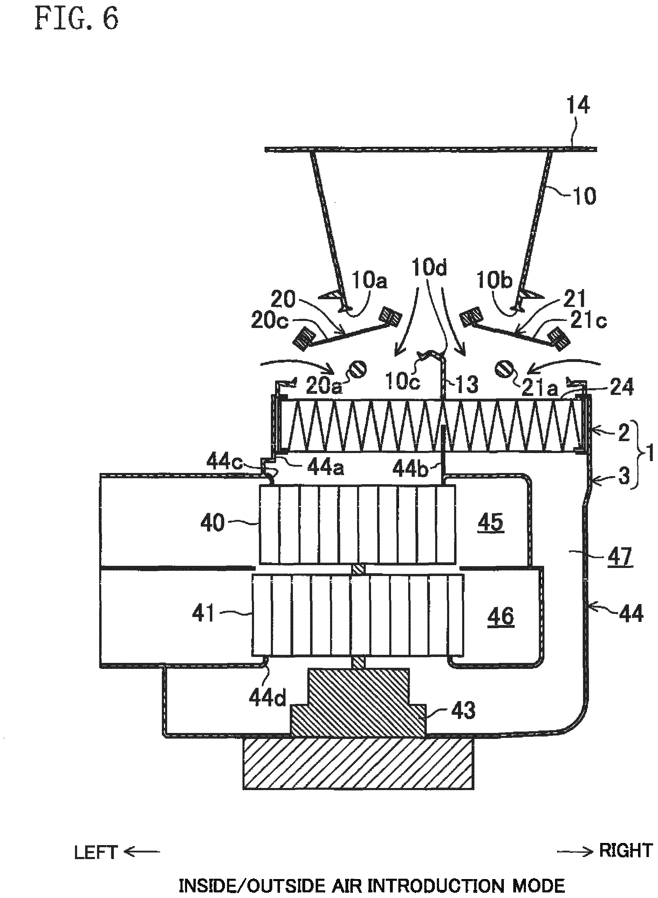

As shown in FIG. 6, when the left inside/outside air switching door 20 opens the left inside air inlet 10a and the left outside air inlet 10c, and the right inside/outside air switching door 21 opens the right inside air inlet 10b and the right outside air inlet 10d, the air blowing device is switched to an inside/outside air introduction mode in which both of the outside air and the inside air are introduced as the air-conditioning air.

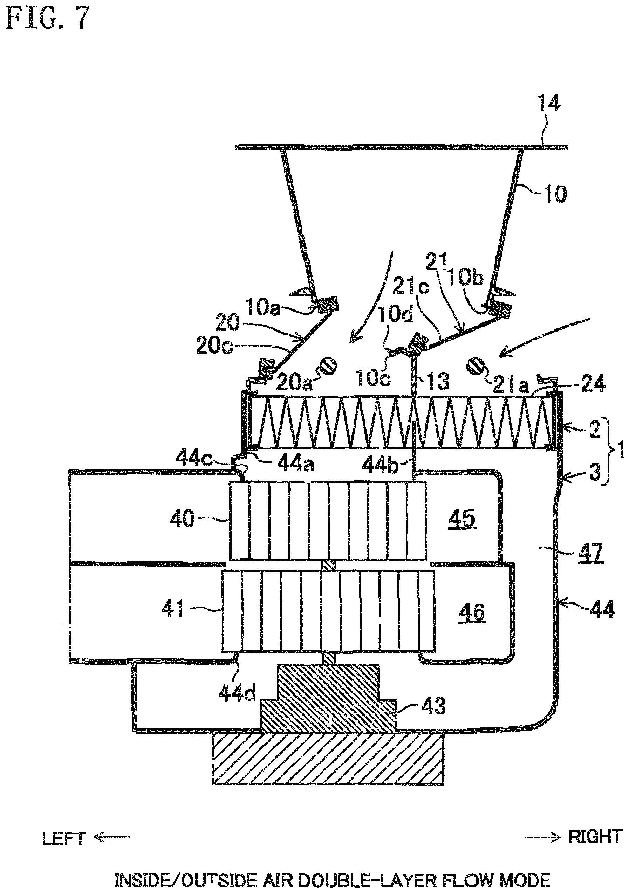

As shown in FIG. 7, when the left inside/outside air switching door 20 fully closes the left inside air inlet 10a and fully opens the left outside air inlet 10c, and the right inside/outside air switching door 21 fully opens the right inside air inlet 10b and fully closes the right outside air inlet 10d, the air blowing device is switched to an inside/outside air double-layer flow mode in which the outside air is introduced into the left part of the casing 10, and the inside air is introduced into the right part of the casing 10.

The door drive unit 23 shown in FIG. 1 is comprised of an electric actuator which drives the left and right inside/outside air switching doors 20 and 21. The door drive unit 23 is detachably attached to the rear wall of the casing 10 by a fastening member or any other suitable member.

As shown in FIGS. 2 and 3, an output shaft of the door drive unit 23 is coupled, via a link mechanism 25, to the rotating shaft 20a of the left inside/outside air switching door 20 and the rotating shaft 21a of the right inside/outside air switching door 21. The link mechanism 25 is configured to transmit a single output to the rotating shafts 20a and 21a of the left and right inside/outside air switching doors 20 and 21, and its fundamental structure has been generally known. Specifically, the link mechanism 25 includes a first link 25a fixed to, and radially protruding from, the rear end of the rotating shaft 20a of the left inside/outside air switching door 20, a second link 25b fixed to, and radially protruding from, the rear end of the rotating shaft 21a of the right inside/outside air switching door 21, and a main link 25c provided with cam grooves (not shown) which respectively engage with the first and second links 25a and 25b. The main link 25c is rotatably supported by a shaft 10e protruding rearward from an upper portion of the rear wall of the casing 10. The door drive unit 23 is configured to allow the main link 25c to rotate about the shaft 10e.

The main link 25c has the cam grooves which respectively engage with the first and second links 25a and 25b. The cam grooves are shaped such that the first and second links 25a and 25c can be moved separately. When the door drive unit 23 is operated to rotate the main link 25c, the left and right inside/outside air switching doors 20 and 21 rotate, and the air blowing device is suitably switched among the outside air introduction mode shown in FIG. 4, the inside air introduction mode shown in FIG. 5, the inside/outside air introduction mode shown in FIG. 6, and the inside/outside air double-layer flow mode shown in FIG. 7. Note that in the inside/outside air introduction mode shown in FIG. 6, the angles of rotation of the left and right inside/outside air switching doors 20 and 21 are delicately controlled so that the amount of inside air introduced and the amount of outside air introduced are changed.

According to the invention, the door drive unit 23 and the link mechanism 25 are attached to the rear wall of the casing 10.

The door drive unit 23 is connected to, and controlled by, an air conditioner controller which is not shown. The air conditioner controller detects a temperature inside the cabin, a temperature outside the cabin, a temperature set by a passenger, humidity in the cabin, and any other parameters, performs a predetermined operation based on the detection results, and controls the door drive unit 23 based on the operation results. Specifically, if it is required to heat the cabin, for example, the door drive unit 23 is controlled such that the air blowing device is switched to the inside/outside air introduction mode shown in FIG. 6 or the inside/outside air double-layer flow mode shown in FIG. 7. Further, the air conditioner controller is also connected to an inside/outside air selector switch (not shown) operated by a passenger. If it is detected from the operation state of the inside/outside air selector switch that the passenger has manually selected the outside air introduction mode, the door drive unit 23 is controlled so that the air blowing device is switched to the outside air introduction mode shown in FIG. 4. If it is detected that the inside air introduction mode is selected by the passenger, the door drive unit 23 is controlled so that the air blowing device is switched to the inside air introduction mode shown in FIG. 5. If the mode is automatically controlled, during cooling, for example, the door drive unit 23 is controlled so that the inside air introduction mode shown in FIG. 5 is selected in view of a cooling efficiency.

In this embodiment, the single door drive unit 23 is used to control the left and right inside/outside air switching doors 20 and 21 in a ganged manner. However, this is not limiting, and two door drive units 23 (not shown) may be provided to separately control the left and right inside/outside air switching doors 20 and 21.

As shown in FIG. 2, a filter insertion hole 10f through which a filter 24 for filtering the air-conditioning air is inserted into the casing 10 is formed through the rear wall of the casing 10. The filter insertion hole 10f is substantially in the shape of a rectangle elongated in the widthwise direction. The filter 24 is in the shape of a plate extending substantially in the horizontal direction, and filters the entire air-conditioning air introduced through the left inside air inlet 10a, the right inside air inlet 10b, the left outside air inlet 10c, and the right outside air inlet 10d. The filter 24 may be made of, for example, pleated nonwoven fabric. An outer surface (rear surface) of the filter 24 serves as a lid of the insertion hole 10f. Thus, inserting the filter 24 into the filter insertion hole 10f closes the filter insertion hole 10f. A lower portion of the inside/outside air switching unit 2 is open, at which the filter 24 is arranged.

A lower end of the door drive unit 23 is positioned above an upper end of the filter insertion hole 10f. Thus, the filter 24 being inserted into, or drawn out of, the filter insertion hole 10f does not interfere with the door drive unit 23. Likewise, a lower end of the link mechanism 25 is also positioned above the upper end of the filter insertion hole 10f.

### (Configuration of Air Blowing Unit)

A configuration of the air blowing unit 3 will be described below. As shown in FIGS. 3 and 4, the air blowing unit 3 includes an upper fan (first fan) 40, a lower fan (second fan) 41, a fan motor 43 which drives the upper and lower fans 40 and 41 to rotate, and a scroll casing 44 made of resin and housing the upper and lower fans 40 and 41. The upper and lower fans 40 and 41 are centrifugal fans (sirocco fans). In this embodiment, the upper fan 40 has a slightly larger diameter than the lower fan 41, but their diameters may be the same. The upper and lower fans 40 and 41 may be integrated into a single member.

The scroll casing 44 is coupled to the casing 10 of the inside/outside air switching unit 2. A communication hole 44a is formed through the top of the scroll casing 44 to communicate with a lower portion of the inside/outside air switching unit 2. Thus, the air-conditioning air introduced into the casing 10 through the left inside air inlet 10a, right inside air inlet 10b, left outside air inlet 10c, and right outside air inlet 10d of the inside/outside air switching unit 2 entirely flows into the scroll casing 44.

As shown in FIG. 4, a lower partition wall 44b extending in the lengthwise direction across the communication hole 44a is formed in an upper portion of the scroll casing 44. The lower partition wall 44b extends in the vertical direction to partition a room in the scroll casing 44 into a right room and a left room, and is arranged to overlap with the upper partition wall 13 of the inside/outside air switching unit 2 when viewed from above. A front end of the lower partition wall 44b is integrated with an inner surface of a front wall of the scroll casing 44, and a rear end of the lower partition wall 44b is integrated with an inner surface of a rear wall of the scroll casing 44. An upper end of the upper partition wall 44b is located inside the filter 24.

Inside the scroll casing 44, an upper passage (first passage) 45 which communicates with the left inside air inlet 10a and the left outside air inlet 10c, and a lower passage (second passage) 46 communicating with the right inside air inlet 10b and the right outside air inlet 10d are formed to be arranged one above the other in the vertical direction. The air-conditioning air flows through both of the upper and lower passages 45 and 46.

An upper end (upstream end) of the upper passage 45 is connected to a region of the communication hole 44a on the left of the lower partition wall 44b via an upper bell-mouth opening 44c. The upper fan 40 is arranged in an upstream portion of the upper passage 45 with its center of rotation oriented in the vertical direction. The upper fan 40 blows the air-conditioning air out of the upper passage 45. A downstream portion of the upper passage 45 extends leftward, and a downstream end of the upper passage 45 opens at a left side wall of the scroll casing 44. The air conditioning unit is connected to the downstream end of the upper passage 45. The air-conditioning air that has flowed through the upper passage 45 is mainly blown toward a defroster outlet inside the air conditioning unit (toward an inner surface of the windshield).

An upstream end of the lower passage 46 is connected to a region of the communication hole 44a on the right of the lower partition wall 44b via a connection passage 47. The connection passage 47 extends downward in the scroll casing 44 from the right region of the communication hole 44a, and then extends to the left. A downstream end of the connection passage 47 is connected to the lower passage 46 via a lower bell-mouth opening 44d. The lower fan 41 is arranged in an upstream portion of the lower passage 46 with its center of rotation oriented in the vertical direction. The lower fan 41 blows the air-conditioning air out of the lower passage 46. The centers of rotation of the lower and upper fans 41 and 40 substantially correspond with each other. A downstream portion of the lower passage 46 extends leftward under the upper passage 45, and a downstream end of the upper passage 46 opens at the left side wall of the scroll casing 44. The air conditioning unit is connected to the downstream end of the lower passage 46. The air-conditioning air that has flowed through the lower passage 46 is mainly blown toward a heat outlet (adjacent to passenger's feet) in the air conditioning unit.

The fan motor 43 is attached to a bottom wall of the scroll casing 44. An output shaft of the fan motor 43 protrudes toward the inside of the scroll casing 44, and the upper and lower fans 40 and 41 are fixed to the output shaft.

### (Advantages of Embodiment)

In the outside air introduction mode shown in FIG. 4, the left outside air inlet 10c and the right outside air inlet 10d are fully opened. Then, as indicated by arrows, only the outside air is introduced as the air-conditioning air through the left outside air inlet 10c and the right outside air inlet 10d, and filtered by the filter 24. The outside air introduced through the left outside air inlet 10c passes through the upper bell-mouth opening 44c and flows through the upper passage 45. The outside air introduced through the right outside air inlet 10d passes through the lower bell-mouth opening 44d and flows through the lower passage 46. Since the left outside air inlet 10c and the right outside air inlet 10d are positioned at the center portion of the casing 10 in the widthwise direction, the outside air can be smoothly introduced through the widthwise center portion of the casing 10, which can maintain a sufficient amount of air blown.

Further, in the outside air introduction mode, the left inside/outside air switching door 20 has rotated to the left, and the open/close plate 20c is tilted such that its lower end is positioned further to the left than its upper end. Thus, the outside air introduced through the left outside air inlet 10c is guided downward by the open/close plate 20c of the left inside/outside air switching door 20. This can also help the outside air flow smoothly. Further, since the right inside/outside air switching door 21 has rotated to the right and the open/close plate 21c is tilted such that its lower end is positioned further to the right than its upper end, the outside air introduced through the right outside air inlet 10d can be guided downward by the open/close plate 21c of the right inside/outside air switching door 21.

In the inside air introduction mode shown in FIG. 5, the left inside air inlet 10a and the right inside air inlet 10b are fully opened. Then, as indicated by arrows, only the inside air is introduced as the air-conditioning air through the left inside air inlet 10a and the right inside air inlet 10b, and filtered by the filter 24. The inside air introduced through the left inside air inlet 10a passes through the upper bell-mouth opening 44c and flows through the upper passage 45. The inside air introduced through the right inside air inlet 10b passes through the lower bell-mouth opening 44d and flows through the lower passage 46. Since the left inside air inlet 10a and the right inside air inlet 10b are respectively formed in the left and right portions of the casing 10, the flow of the inside air can be smoothly guided toward the center portion of the casing 10 in the widthwise direction, which makes the introduction of the inside air smooth.

In the inside air introduction mode, the open/close plate 20c of the left inside/outside air switching door 20 has rotated to the right. Thus, the inside air introduced through the left inside air inlet 10a is guided downward by the open/close plate 20c of the left inside/outside air switching door 20. Further, since the open/close plate 21c of the right inside/outside air switching door 21 has rotated to the left, the inside air introduced through the right inside air inlet 10b is guided downward by the open/close plate 21c of the right inside/outside air switching door 21.

In the inside/outside air introduction mode shown in FIG. 6, the left inside air inlet 10a, the right inside air inlet 10b, the left outside air inlet 10c, and the right outside air inlet 10d are opened. Thus, the inside air and the outside air are introduced as the air-conditioning air, and flow through the upper and lower passages 45 and 46. Since the left inside air inlet 10a and the right inside air inlet 10b are respectively formed in the left and right portions of the casing 10, the left and right inside air inlets 10a and 10b do not open toward the inside of the cabin (to the rear side). Thus, noise from the outside of the cabin is not easily heard by passengers in the cabin through the left and right inside air inlets 10a and 10b. This can provide the cabin with improved quietness.

Moreover, in the inside/outside air introduction mode, the outside air flows into the casing 10 from above, and the inside air laterally flows into the casing 10. Thus, the flow of the outside air and the flow of the inside air do not interfere with each other before they go into the casing 10.

In the inside/outside air double-layer flow mode shown in FIG. 7, the outside air introduced through the left outside air inlet 10c passes through the upper bell-mouth opening 44c and flows through the upper passage 45, and the inside air introduced through the right inside air inlet 10b passes through the lower bell-mouth opening 44d and flows through the lower passage 46. As indicated by arrows, the outside air introduced through the left outside air inlet 10c and the inside air introduced through the right inside air inlet 10b flow substantially in the same direction. However, the upper and lower partition walls 13 and 44b do not allow the outside air and the inside air to interfere with each other. This configuration allows the inside air and the outside air to flow smoothly in the inside/outside air double-layer flow mode.

Then, the outside air that has flowed through the upper passage 45 is fed to the inner surface of the windshield. This can reduce the fogging of the windshield. Meanwhile, the inside air that has flowed through the lower passage 46 circulates in the cabin. This can improve the heating efficiency. Also in this mode, noise from the outside of the cabin is not easily heard by passengers in the cabin through the right inside air inlet 10b. This can provide the cabin with improved quietness.

Moreover, in this embodiment, the air conditioning unit is arranged on the left of the air blowing device 1 within the instrument panel, and therefore, almost no clearance is left on the sides of the air blowing device 1 in the widthwise direction. On the other hand, some clearance can be created in front of and behind the air blowing device 1. This can enlarge the casing 10 of the air blowing device 1 in the lengthwise direction. The left inside air inlet 10a, left outside air inlet 10c, right inside air inlet 10b, and right outside air inlet 10d of the casing 10 extend in the lengthwise direction. Thus, even if the inlets 10a, 10b, 10c, and 10d have their vertical dimension reduced so as to shorten the height of the air blowing device 1, each of the inlets 10a, 10b, 10c, and 10d can maintain a sufficient dimension in the lengthwise direction, and keep a large opening area. This can reduce the possibility of decrease in the amount of air blown, while improving the degree of flexibility in arrangement of the air blowing device 1. If the left inside air inlet 10a, the left outside air inlet 10c, the right inside air inlet 10b, and the right outside air inlet 10d have their vertical dimension reduced, the left and right inside/outside air switching doors 20 and 21 can also be made smaller in the vertical direction.

In addition, the door drive unit 23 is arranged behind the casing 10 where there is some clearance left. This can improve the degree of arrangement of the door drive unit 23.

The filter insertion hole 10f has been formed through the rear wall of the rear casing member 12. This configuration allows the filter 24 to be easily replaced by the passenger in the cabin.

The lower end of the door drive unit 23 is positioned above the upper end of the filter insertion hole 10f. This can reduce the possibility that the filter 24 interferes with the door drive unit 23 during replacement, and thus, facilitate the replacement.

Moreover, the left inside air inlet 10a and left outside air inlet 10c of the casing 10 are arranged side by side in the widthwise the rotating shaft 20a of the left inside/outside air switching door 20 is disposed between the left inside air inlet 10a and the left outside air inlet 10c. Therefore, rotating the left inside/outside air switching door 20 in the widthwise direction can open and close the left inside air inlet 10a and the left outside air inlet 10c.

### INDUSTRIAL APPLICABILITY

As can be seen from the foregoing description, an air blowing device according to the present invention can be used as an air blower of a vehicle air conditioner.

### DESCRIPTION OF REFERENCE CHARACTERS

- 1: Air Blowing Device
- 10: Casing
- 10a: Left Inside Air Inlet
- 10b: Right Inside Air Inlet
- 10c: Left Outside Air Inlet
- 10d: Right Outside Air Inlet
- 10f: Filter Insertion Hole
- 11: Front Casing Member
- 12: Rear Casing Member
- 20: Left Inside/Outside Air Switching Door
- 20a: Rotating Shaft
- 20c: Open/Close Plate
- 21: Right Inside/Outside Air Switching Door
- 21a: Rotating Shaft
- 21c: Open/Close Plate
- 23: Door Drive Unit

## Claims

1. An air blowing device, comprising:
a casing (10) having an outside air inlet (10c, 10d) through which air outside a cabin is introduced as air-conditioning air, and an inside air inlet (10a, 10b) through which air inside the cabin is introduced as the air-conditioning air;
an inside/outside air switching door (20, 21) which opens and closes the outside air inlet (10c, 10d) and the inside air inlet (10a, 10b); and
a door drive unit (23) which drives the inside/outside air switching door (20, 21),
the air blowing device (1) being mounted on a vehicle, and blowing the air-conditioning air, wherein
the casing (10) is divided into a front casing member (11) and a rear casing member(12) at a center portion of the casing in the lengthwise direction of the vehicle,
a filter insertion hole (10f) through which a filter for filtering the air-conditioning air is inserted into the casing (10) is formed through a rear wall of the rear casing member (12),
the outside air inlet (10c, 10d) and the inside air inlet (10a, 10b) of the casing (10) extend in a lengthwise direction of the vehicle,
the inside/outside air switching door (20, 21) has a rotating shaft (21a) which extends in the lengthwise direction of the vehicle, and is rotatably supported by the casing (10), the rotating shaft (21a) being provided with an open/close plate (20c) which opens and closes the outside air inlet (10c, 10d) and the inside air inlet (10a, 10b),
the door drive unit (23) is attached to a portion of the rear wall of the rear casing member (12), the portion being positioned above the filter insertion hole (10f), and the door drive unit (23) is coupled to the rotating shaft (21a) of the inside/outside air switching door (20, 21),
a first passage and a second passage, through each of which the air-conditioning air flows, are arranged one above the other in a vertical direction in the air blowing device (1), each of the first and second passages communicating with the outside air inlet (10c, 10d) and the inside air inlet (10a, 10b), and
a first fan and a second fan, each of which blows the air-conditioning air, are respectively arranged in the first and second passages.

2. The air blowing device of claim 1, wherein
a lower end of the door drive unit (23) is positioned above an upper end of the filter insertion hole (10f).

3. The air blowing device of claim 1, wherein
the outside air inlet (10c, 10d) and the inside air inlet (10a, 10b) are arranged side by side in the casing (10) in a widthwise direction of the vehicle, and
the rotating shaft (20a) of the inside/outside air switching door (20, 21) is disposed between the outside air inlet (10c, 10d) and the inside air inlet (10a, 10b).

4. The air blowing device of claim 1, wherein
the inside air inlet (10a, 10b) is open at least in a left or right portion of the casing (10) in the widthwise direction of the vehicle.

5. The air blowing device of claim 4, wherein
the inside air inlet (10a, 10b) includes inside air inlets which are respectively open in the left and right portions of the casing (10) in the widthwise direction of the vehicle, and
the outside air inlet (10c, 10d) is formed between the inside air inlet (10a) in the left portion of the casing (10) and the inside air inlet (10b) in the right portion of the casing (10).

## Patentansprüche

1. Luftausblasvorrichtung, aufweisend:
ein Gehäuse (10) mit einem Außenlufteinlass (10c, 10d), durch den Luft außerhalb einer Kabine als Klimaanlagenluft eingeleitet wird, und einem Innenlufteinlass (10a, 10b), durch den Luft innerhalb der Kabine als Klimaanlagenluft eingeleitet wird;
eine Innen/Außenluft-Schaltklappe (20, 21), die den Außenlufteinlass (10c, 10d) und den Innenlufteinlass (10a, 10b) öffnet und schließt; und
eine Türenantriebseinheit (23), welche die Innen/Außenluft-Schaltklappe (20, 21) antreibt,
wobei die Luftausblasvorrichtung (1) an einem Fahrzeug montiert ist und die Klimaanlagenluft ausbläst, wobei
das Gehäuse (10) in ein vorderes Gehäuseelement (11) und ein hinteres Gehäuseelement (12) an einer Mittelposition des Gehäuses in der Längsrichtung des Fahrzeugs unterteilt ist,
eine Filtereinsatzöffnung (10f), durch die ein Filter zum Filtern der Klimaanlagenluft in das Gehäuse (10) eingesetzt ist, durch eine Rückwand des hinteren Gehäuseelements (12) gebildet ist,
der Außenlufteinlass (10c, 10d) und der Innenlufteinlass (10a, 10b) des Gehäuses (10) sich in einer Längsrichtung des Fahrzeugs erstrecken,
die Innen/Außenluft-Schaltklappe (20, 21) eine Drehwelle (21a) aufweist, die sich in der Längsrichtung des Fahrzeugs erstreckt und durch das Gehäuse (10) drehbar gelagert wird, wobei die Drehwelle (21a) mit einer Offen/Geschlossen-Platte (20c) versehen ist, die den Außenlufteinlass (10c, 10d) und den Innenlufteinlass (10a, 10b) öffnet und schließt,
die Klappenantriebseinheit (23) an einem Teil der Rückwand des hinteren Gehäuseelements (12) befestigt ist, wobei der Teil oberhalb der Filtereinsatzöffnung (10f) positioniert ist, und die Klappenantriebseinheit (23) an die Drehwelle (21a) der Innen/Außenluft-Schaltklappe (20, 21) gekoppelt ist,
eine erste Passage und eine zweite Passage, die beide von der Klimaanlagenluft durchströmt werden, übereinander in einer Vertikalrichtung in der Luftausblasvorrichtung (1) angeordnet sind, wobei die erste und zweite Passage jeweils mit dem Außenlufteinlass (10c, 10d) und dem Innenlufteinlass (10a, 10b) kommunizieren, und
ein erster Ventilator und ein zweiter Ventilator, die jeweils die Klimaanlagenluft blasen, in den ersten bzw. zweiten Passagen angeordnet sind.

2. Luftausblasvorrichtung nach Anspruch 1, wobei
ein unteres Ende der Klappenantriebseinheit (23) über einem oberen Ende der Filtereinsatzöffnung (10f) positioniert ist.

3. Luftausblasvorrichtung nach Anspruch 1, wobei
der Außenlufteinlass (10c, 10d) und der Innenlufteinlass (10a, 10b) nebeneinander in dem Gehäuse (10) in einer Breitenrichtung des Fahrzeugs angeordnet sind, und
die Drehwelle (20a) der Innen/Außenluft-Schaltklappe (20, 21) zwischen dem Außenlufteinlass (10c, 10d) und dem Innenlufteinlass (10a, 10b) angeordnet ist.

4. Luftausblasvorrichtung nach Anspruch 1, wobei
der Innenlufteinlass (10a, 10b) zumindest in einem linken oder rechten Teil des Gehäuses (10) in der Breitenrichtung des Fahrzeugs offen ist.

5. Luftausblasvorrichtung nach Anspruch 4, wobei
der Innenlufteinlass (10a, 10b) Innenlufteinlässe umfasst, die in den linken und rechten Teilen des Gehäuses (10) in der Breitenrichtung des Fahrzeugs jeweils offen sind, und
der Außenlufteinlass (10c, 10d) zwischen dem Innenlufteinlass (10a) in dem linken Teil des Gehäuses (10) und dem Innenlufteinlass (10b) in dem rechten Teil des Gehäuses (10) gebildet ist.

## Revendications

1. Dispositif de soufflage d'air, comprenant :
un carter (10) présentant une admission d'air extérieur (10c, 10d) à travers laquelle de l'air à l'extérieur d'une cabine est introduit comme air de climatisation, et une admission d'air intérieur (10a, 10b), à travers laquelle de l'air à l'intérieur de la cabine est introduit comme air de climatisation ;
une porte de commutation entre air intérieur/extérieur (20, 21), laquelle ouvre et ferme l'admission d'air extérieur (10c, 10d) et l'admission d'air intérieur (10a, 10b) ;
une unité d'entraînement de porte (23), laquelle entraîne la porte de commutation entre air intérieur/extérieur (20, 21), et
le dispositif de soufflage d'air (1) étant monté sur un véhicule, et soufflant l'air de climatisation, dans lequel
le carter (10) est divisé en un élément de carter avant (11) et un élément de carter arrière (12) en une portion centrale du carter dans la direction longitudinale du véhicule ;
un trou d'introduction de filtre (10f), à travers lequel un filtre pour filtrer l'air de climatisation est introduit dans le carter (10), est formé à travers une paroi arrière de l'élément de carter arrière (12) ;
l'admission d'air extérieur (10c, 10d) et l'admission d'air intérieur (10a, 10b) du carter (10) s'étendent dans une direction longitudinale du véhicule ;
la porte de commutation entre air intérieur/extérieur (20, 21) présente un arbre tournant (21a), lequel s'étend dans la direction longitudinale du véhicule, et est supportée en rotation par le carter (10), l'arbre tournant (21a) étant doté d'une plaque d'ouverture/fermeture (20c), laquelle ouvre et ferme l'admission d'air extérieur (10c, 10d) et l'admission d'air intérieur (10a, 10b) ;
l'unité d'entraînement de porte (23) est rattachée à une portion de la paroi arrière de l'élément de carter arrière (12), la portion étant positionnée au-dessus du trou d'introduction de filtre (10f), et l'unité d'entraînement de porte (23) est accouplée à l'arbre tournant (21a) de la porte de commutation entre air intérieur/extérieur (20, 21) ;
un premier passage et un second passage, à travers chacun desquels l'air de climatisation circule, sont agencés l'un au-dessus de l'autre dans une direction verticale dans le dispositif de soufflage d'air (1), chacun des premier et second passages communiquant avec l'admission d'air extérieur (10c, 10d) et
l'admission d'air intérieur (10a, 10b), et
un premier ventilateur et un second ventilateur, chacun soufflant l'air de climatisation, sont agencés respectivement dans les premier et second passages.

2. Dispositif de soufflage d'air selon la revendication 1, dans lequel
une extrémité inférieure de l'unité d'entraînement de porte (23) est positionnée au-dessus d'une extrémité supérieure du trou d'introduction de filtre (10f).

3. Dispositif de soufflage d'air selon la revendication 1, dans lequel
l'admission d'air extérieur (10c, 10d) et l'admission d'air intérieur (10a, 10b) sont agencées côte à côte dans le carter (10) dans une direction de largeur du véhicule, et
l'arbre tournant (20a) de la porte de commutation entre air intérieur/extérieur (20, 21) est disposé entre l'admission d'air extérieur (10c, 10d) et l'admission d'air intérieur (10a, 10b).

4. Dispositif de soufflage d'air selon la revendication 1, dans lequel l'admission d'air intérieur (10a, 10b) est ouverte au moins dans une portion de gauche ou de droite du carter (10) dans la direction de largeur du véhicule.

5. Dispositif de soufflage d'air selon la revendication 4, dans lequel
l'admission d'air intérieur (10a, 10b) inclut des admissions d'air, lesquelles sont respectivement ouvertes dans les portions de gauche et de droite du carter (10) dans la direction de largeur du véhicule, et
l'admission d'air extérieur (10c, 10d) est formée entre l'admission d'air intérieur (10a) dans la portion gauche du carter (10) et l'admission d'air intérieur (10b) dans la portion droite du carter (10).
